# EUROPÄISCHE PATENTSCHRIFT

(11) **EP 0 940 457 B1**
(45) Veröffentlichungstag und Bekanntmachung des Hinweises auf die Patenterteilung: **14.08.2002**
(21) Anmeldenummer: 99102928.1
(22) Anmeldetag: 13.02.1999
(51) Int. Cl.: C09D 151/08, C09D 5/38, B05D 7/26

(54) **Wässrige Überzugsmittel und deren Verwendung in einem Verfahren zur Herstellung von Mehrschichtüberzügen**
Aqueous coating material and its use in a process for the production of multi-coat paints
Produits d'enduction aqueux et leur utilisation dans un procédé pour la production de peintures multicouches

(30) Priorität: 03.03.1998 DE 19808869
(43) Veröffentlichungstag der Anmeldung: 08.09.1999
(73) Patentinhaber: E.I. DU PONT DE NEMOURS AND COMPANY, Wilmington Delaware 19898 (US)
(72) Erfinder: Bosch, Werner Dr., 42399 Wuppertal (DE); Diener, Wolfgang, Dr., 42113 Wuppertal (DE); Müller, Frank, 42327 Wuppertal (DE); Schmidt, Holger, Dr., 42115 Wuppertal (DE); Vogt-Birnbrich, Bettina, Dr., 42719 Solingen (DE)
(74) Vertreter: Gille Hrabal Struck Neidlein Prop Roos

(56) Entgegenhaltungen:
- EP-A- 0 581 211
- WO-A-98/10028

## Beschreibung

Die Erfindung betrifft wäßrige Überzugsmittel, nachfolgend auch als wäßrige Metallicbasislacke bezeichnet, und ihre Verwendung bei der Herstellung von Mehrschichtüberzügen vom Basislack/Klarlack-Typ.
Aus den EP-A-0 260 447 und EP-A-0 581 211 sind wäßrige Basislacke bekannt, die als filmbildendes Material ein Reaktionsprodukt aus einem carboxylfunktionellen, zusätzlich Epoxidgruppen enthaltenden Polykondensat und alpha,beta-olefinisch ungesättigten Monomeren, eine Polyurethandispersion und gegebenenfalls Anreibeharze enthalten. Bei den Polyurethandispersionen handelt es sich um übliche anionische Polyurethandispersionen, die erhalten werden können durch Kettenverlängerung eines neutralisierten carboxylfunktionellen Polyurethan-Prepolymeren mit endständigen Isocyanatgruppen. Die Kettenverlängerung kann dabei durch Reaktion der Isocyanatgruppen mit Wasser oder mit Polyaminen und/oder Hydrazin durchgeführt werden. Gemäß dieses Standes der Technik hergestellte Metallicbasislacke erfüllen zwar weitestgehend die an Wasserbasislacke gestellten technologischen Anforderungen bei der Automobil- und Automobilteilelackierung, können den ständig steigenden Anforderungen hinsichtlich der Ausprägung des Metalleffekts jedoch nicht in jedem Fall gerecht werden. Sie sind verbesserungsbedürftig hinsichtlich ihres Deckvermögens. Nicht alle verfügbaren Metalleffektpigmente können zur Herstellung wäßriger Metallicbasislacke des Standes der Technik verwendet werden, vielmehr müssen die einzelnen vom Metallpigmenthersteller dem Lackhersteller zugelieferten Metalleffektpigment-Wareneingänge innerhalb enger Toleranzen liegen, wenn die Spezifikationen wäßriger Metallicbasislacke hinsichtlich Farbton, Metalleffekt und Deckvermögen erfüllt werden sollen.
Aufgabe der Erfindung ist es wäßrige Metallicbasislacke bereitzustellen, die solchen des Standes der Technik überlegen sind. Sie sollen insbesondere Überzüge ergeben, die hinsichtlich Brillanz, Deckvermögen und Metalleffekt überlegen sind.

Die Aufgabe wird gelöst durch Bereitstellung wäßriger, ein oder mehrere Metalleffektpigmente, Bindemittel, gegebenenfalls weitere Pigmente und Füllstoffe, gegebenenfalls Vernetzer, Lösemittel und lackübliche Additive enthaltender Überzugsmittel, die dadurch gekennzeichnet sind, daß die Bindemittel enthalten
A) 50 bis 90 Gew.-% eines Reaktionsproduktes aus a) 5 bis 95 Gew.-% eines carboxyfunktionellen Polykondensats, das zusätzlich Epoxidgruppen enthalten kann, und b) 95 bis 5 Gew.-% mindestens eines radikalisch polymerisierbaren olefinisch ungesättigten Monomeren, wobei sich die Mengenangaben der Bestandteile a) und b) auf den Festkörper beziehen und ihre Summe stets 100 Gew.-% beträgt,
B) 50 bis 10 Gew.-% eines Hybridpolymeren, hergestellt durch radikalische Polymerisation von olefinisch ungesättigten Monomeren in Gegenwart von wäßrig dispergierten Siloxanbrücken und/oder Silanolgruppen enthaltenden Polyurethanharzen, die gegebenenfalls olefinisch ungesättigte Doppelbindungen enthalten können, wobei die Summe der Gew.-% von A) und B) 100 Gew.-% ergibt, und
C) 0 bis 50 Gew.-%, bezogen auf die Summe aus A) und B), eines oder mehrerer weiterer Bindemittel,
wobei sich sämtliche Gew.-%-Angaben jeweils auf den Festkörper beziehen.

Die in den erfindungsgemäßen wäßrigen Metallicbasislacken eingesetzte Bindemittelkomponente A) kann beispielsweise hergestellt werden durch radikalische Emulsionspolymerisation von Aa) 5 bis 95 Gew.-% eines wäßrig vorliegenden carboxyfunktionellen Polykondensats, das zusätzlich Epoxidgruppen enthalten kann, und Ab) 95 bis 5 Gew.-% mindestens eines radikalisch polymerisierbaren olefinisch ungesättigten Monomeren.

Durch Wahl geeigneter Ausgangssubstanzen ist eine Einstellung der Eigenschaften der Bindemittelkomponente A) innerhalb weiter Grenzen möglich. Beispielsweise können durch Polymerisation nicht vernetzend wirkender Vinylmonomerer in der wäßrigen Dispersion oder Lösung eines unvernetzten selbsthärtenden carboxyfunktionellen Polykondensats wasserverdünnbare Polymerisate hergestellt werden. Dabei können beispielsweise die hydrophilen oder hydrophoben Eigenschaften und die Härte und die Flexibilität durch geeignete Wahl der Komponenten Aa) und Ab) gezielt eingestellt werden. Weiterhin können durch den Einbau reaktiver Vinylmonomerer zunächst in Wasser dispergierfähige Polymerisate hergestellt werden, die dann bevorzugt nach dem Aufbringen auf ein Substrat beispielsweise durch Einbrennen in den vernetzten Zustand überführt werden können.

Geeignete Polykondensate der Komponente Aa) können in bekannter Weise beispielsweise gemäß DE-A-28 11 913 oder DE-A-33 01 729 durch Umsetzung von i) halogenfreien Polycarbonsäureeinheiten, ii) Neutralisationsmitteln, iii) OH-Gruppen enthaltenden Polymeren mit einer Hydroxylzahl von 20 bis 150 mg KOH/g und gegebenenfalls iv) Epoxidverbindungen und anschließender Lösung und/oder Dispergierung in Wasser hergestellt werden. Das gewichtsmittlere Molekulargewicht derartiger Polykondensate liegt bevorzugt bei 2000 bis 100000, besonders bevorzugt bei 6000 bis 50000 (bestimmt durch Gelchromatographie mit Polystyrol-Standard). Ihre Säurezahl in Wasser beträgt beispielsweise 1 bis 200, vorzugsweise 5 bis 150 mg KOH/g, bezogen auf Festharz. Die Iodzahl liegt beispielsweise unterhalb von 50, vorzugsweise unterhalb von 20 und besonders bevorzugt unterhalb von 5, bezogen auf Festharz.

Bevorzugte halogenfreie Polycarbonsäureeinheiten i) zur Herstellung der Komponente Aa) sind Trimellithsäure-Einheiten enthaltende Polycarbonsäureanhydridgemische, die sich z.B. durch Umsetzung von Trimellithsäureanhydrid mit entsprechenden zweiund/oder höherwertigen Alkoholen in üblicher Weise herstellen lassen. Die Säurezahl (in Wasser) dieser Verbindungen liegt zumeist zwischen 10 und 1000, vorzugsweise zwischen 100 und 800 mg KOH/g.
Bevorzugte Neutralisationsmittel ii) zur Herstellung der Komponente Aa) sind organische Basen, wie aliphatische sekundäre und/oder tertiäre Amine, beispielsweise Trimethyl-, Triethyl- und Tripropylamin, N,N-Dimethylcyclohexylamin, N-Methylmorpholin, Diisopropanolamin, Dimethylethanolamin. Die Basenmenge wird im allgemeinen so gewählt, daß ein Neutralisationsgrad von 50 bis 120 %, vorzugsweise von 55 bis 100 %, bezogen auf die freien Carboxylgruppen der Bindemittelkomponente A) resultiert.

Als OH-Gruppen enthaltende Polymere iii) zur Herstellung der Komponente Aa) können beispielsweise OH-Gruppen enthaltende (Meth)acrylcopolymere verwendet werden. Bevorzugte OH-Gruppen enthaltende Polymere iii) zur Herstellung der Komponente Aa) sind Polyester mit freien OH-Gruppen. Sie können aus Polycarbonsäuren wie beispielsweise Phthal-, lsophthal-, Terephthal-, Trimellith-, Pyromellith-, Malein-, Fumar-, Endomethylentetrahydrophthal-, Hexahydrophthal-, Bernstein-, Adipin-, Azelain-, Sebacin-, Dodecandicarbonsäure und deren möglichen Anhydriden sowie geeigneten Alkoholkomponenten, wie aliphatischen und/oder cycloaliphatischen Polyolen mit beispielsweise 2 bis 4 OH-Gruppen pro Molekül, wie Ethylenglykol, Propandiole, Butandiole, Pentandiole, Neopentylglykol, Hexandiole, Diethylenglykol, Glycerin, Trimethylolethan, Trimethylolpropan, Pentaerythrit und Dipentaerythrit hergestellt werden. Die Polycarbonsäuren und Polyalkohole können dabei teilweise durch Monocarbonsäuren bzw. Monoalkohole in an sich bekannter Weise ersetzt sein.

Das Festkörperverhältnis von Polycarbonsäureanhydridgemisch i) zu OH-Gruppen enthaltenden Polymeren iii) liegt bei der Herstellung der Komponente Aa) bevorzugt zwischen 50:50 und 10:90, besonders bevorzugt 40:60 bis 15:85.

Bevorzugte Epoxidverbindungen iv), die gegebenenfalls zur Herstellung der Komponente Aa) verwendet werden können, sind epoxidierte Öle, z.B. solche auf Basis von Soja-, Lein-, Tall- und/oder Ricinenöl mit Epoxidzahlen von 1 bis 50, vorzugsweise von 2 bis 25 und insbesondere 3 bis 15. Die Epoxidgruppen der Komponente iv) reagieren unter Esterbildung mit den Carboxylgruppen der aus i) und iii) erhaltenen Reaktionsgemische. Das Verhältnis des freien Carboxylgruppenäquivalents dieses Reaktionsgemisches zu dem Epoxidgruppenäquivalent von iv) beträgt beispielsweise 3 : 1 bis 1 : 3, vorzugsweise 1,25 : 1 bis 1:1,25.
Als Komponente Ab) kommen olefinisch ungesättigte Monomere, und zwar praktisch alle radikalisch polymerisierbaren Monomeren in Frage, wie sie beispielsweise nach den für Copolymerisationen üblichen Kriterien gewählt werden können, die durch das Q- und e-Schema nach Alfrey und Price bzw. durch die Copolymerisationsparameter vorgegeben sind (vgl. z.B. Brandrup, Immergut, Polymer Handbook, 2nd ed. (1975) John Wiley Sohn, New York).

Beispiele für olefinisch ungesättigte Monomere der Komponente Ab) sind Vinylester von aliphatischen Carbonsäuren, wie z.B. Vinylacetat, Vinylpropionat, Vinylester verzweigter (C9-C12)-Carbonsäuren, wie Versaticsäurevinylester; Vinylether, beispielsweise Methyl-, Ethyl- oder Alkylvinylether mit 3 bis 6 C-Atomen; Allylether wie Allylglycidylether; N-Vinylpyrrolidon; Vinylaromaten wie Styrol, alpha-Methylstyrol, Vinyltoluol, Vinylpyridin; (Meth)acrylsäureester wie Methyl(meth)acrylat, Ethyl(meth)acrylat, Propyl(meth)acrylat, die verschiedenen isomeren Butyl(meth)acrylate, isomere Octyl(meth)acrylate, z.B. 2-Ethylhexyl(meth)acrylat; (Meth)acrylamid, N-Methylol(meth)acrylamid, (Meth)acrylnitril; Ester und Amide von alpha,beta-ethylenisch ungesättigten Mono - und Dicarbonsäuren wie Crotonsäure, Maleinsäure, Fumarsäure; Monomere vom Typ mehrfach ungesättigter Verbindungen wie Divinylbenzol, Ethandioldi(meth)acrylat, Hexandioldi(meth)acrylat, Glycerintri(meth)acrylat. Werden mehrfach ethylenisch ungesättigte Monomere eingesetzt, so beträgt ihre Menge im allgemeinen 0,01 bis 20 Gew.-%, bezogen auf die Gesamtmenge der Monomeren Ab).

Es ist auch möglich als Monomere Ab) solche mit funktionellen Gruppen einzusetzen. z.B. mit solchen chemischen Gruppierungen, die im aufgebrachten wäßrigen Metallicbasislack zur Vernetzung rühren können, wie beispielsweise Carbonsäure-. Hydroxy- und Epoxidgruppen.

Monomere, die Carbonsäuregruppierungen tragen, sind alpha,beta-ethylenisch ungesättigte Mono- und Dicarbonsäuren, wie z.B. Crotonsäure, Sorbinsäure, Itaconsäure, Fumarsäure, Maleinsäure, Halbester der Itaconsaure, der Fumarsäure und der Maleinsäure, bevorzugt aber (Meth)acrylsäure.

Beispiele für ungesättigte Monomere, die Epoxidgruppen aufweisen, sind ungesättigte Glycidylester oder -ether wie z.B. Glycidyl(meth)acrylat, Allylglycidylether.

Beispiele für olefinisch ungesättigte Monomere, die Hydroxylgruppen aufweisen sind insbesondere Hydroxyalkyl(meth)acrylate, wie Hydroxyethyl(meth)acrylat, sowie die Hydroxypropyl- und -butyl(meth)acrylate.

Die Mengenverhältnisse der Komponenten Aa) und Ab) können in weiten Grenzen schwanken. Vorzugsweise werden 10 bis 90 Gew.-% der Komponente Aa) mit 90 bis 10 Gew.-% der Monomeren Ab) umgesetzt, jeweils bezogen auf den Festkörper. Bevorzugte Dispersionscopolymerisate können als Monomereinheiten bezogen auf die Menge der Komponente Ab) bis zu 100 Gew.-% Methylmethacrylat und/oder n-Butylacrylat, 0 bis 20 Gew.-% Hydroxyethylmethacrylat, 0 bis 20 Gew.-% Glycidylmethacrylat und 0 bis 20 Gew.-% (Meth)acrylsäure enthalten, wobei die Summe der Gew.-% stets 100 Gew.-% beträgt. Besonders bevorzugt ist ein Mischungsverhältnis, das 15 bis 80 Gew.-% Methylmethacrylat, 15 bis 50 Gew.-% n-Butylacrylat, 0 bis 15 Gew.-% Hydroxyethylmethacrylat, 0 bis 15 Gew.-% Glycidylmethacrylat und 0 bis 5 Gew.-% (Meth)acrylsäure als Monomereinheiten enthält.

Unter (Meth)acryl ist Acryl und/oder Methacryl zu verstehen.

Die Herstellung der Bindemitteldispersion A) wird bevorzugt als Emulsionspolymerisation in wäßrigem Medium bei Temperaturen im Bereich zwischen 0 und 150°C, vorzugsweise zwischen 20 und 100°C, insbesondere zwischen 40 und 90°C, gegebenenfalls unter Druck, durchgeführt. Die Komponente Aa) wird beispielsweise als 5 bis 65 gew.-%iges wäßriges System vorgelegt und dann mit den olefinisch ungesättigten Monomeren Ab) unter Zusatz eines Polymerisationsinitiators und gegebenenfalls weiterer üblicher Zusätze wie Emulgatoren und/oder Schutzkolloiden sowie Molekulargewichtsreglern polymerisiert. Das wäßrige Medium des Polymerisationsansatzes kann allein aus der wäßrigen Komponente Aa) stammen, im allgemeinen wird jedoch noch Wasser dem Ansatz zugegeben, um die besten Bedingungen für die Emulsionspolymerisation zu erreichen.

Die Polymerisat- bzw. Bindemitteldispersionen A) können selbstvernetzend oder fremdvernetzend sein. Zur Fremdvernetzung können übliche Vernetzer mit geeigneten funktionellen Gruppen verwendet werden, die z.B. beim Erwärmen oder Einbrennen mit den reaktiven Gruppen der Komponente A) reagieren.

Die in den erfindungsgemäßen wäßrigen Metallicbasislacken eingesetzten Hybridpolymeren der Komponente B) werden hergestellt durch radikalische Polymerisation von olefinisch ungesättigten Monomeren in Gegenwart wäßrig dispergierter, Siloxanbrücken und/oder Silanolgruppen enthaltender Polyurethanharze. Die Polyurethanharze können olefinische Doppelbindungen enthalten oder frei davon sein.

Bei den durch Polymerisation olefinisch ungesättigter Monomerer in Gegenwart wäßrig dispergierter, Siloxanbrücken und/oder Silanolgruppen enthaltender Polyurethanharze hergestellten Hybridpolymeren der Komponente B) handelt es sich um Polyurethan/Polymerisat-Polymerhybride mit einem Gewichtsverhältnis von Polyurethan- zu Polymerisatanteil von 0,05 : 1 bis 50 : 1, bevorzugt bis zu 10 : 1, einer Hydroxylzahl von 0 bis 150, bevorzugt unter 100 mg KOH/g, bezogen auf Festharz, wobei an Silizium gebundene Hydroxylgruppen bei der Berechnung der OH-Zahl nicht mitgezählt werden, und einer Säurezahl von 1,5 bis 60 mg KOH/g, bevorzugt 3 bis 40 mg KOH/g, bezogen auf Festharz, und einem Gehalt von 0,5 bis 300 mmol Silizium pro 100 g Festharz in Form von in den Polyurethanteil eingebundenen Siloxanbrücken (-Si-O-Si-) und/oder in Form von an den Polyurethanteil gebundenen Silanolgruppen.

Insbesondere die durch Polymerisation in Gegenwart olefinische Doppelbindungen enthaltender Polyurethanharze hergestellten Hybridpolymeren haben ein Zahlenmittel der Molmasse (Mn) von 8000 bis 1500000.
Die durch Polymerisation in Gegenwart olefinische Doppelbindungen enthaltender Polyurethanharze hergestellten Hybridpolymeren haben bevorzugt einen Gehalt von 1 bis 100 mmol Silizium pro 100 g Festharz in Form von in den Polyurethanteil eingebundenen Siloxanbrücken (-Si-O-Si-) und/oder in Form von an den Polyurethanteil gebundenen Silanolgruppen.

Die durch Polymerisation in Gegenwart olefinische Doppelbindungen enthaltender Polyurethanharze hergestellten Hybridpolymeren sind lineare Blockpolymere oder sie besitzen einen verzweigten Aufbau, beispielsweise als Kammpolymer, oder sie liegen in Form von Mikrogelen vor.

Die durch Polymerisation in Gegenwart von olefinischen Doppelbindungen freier Polyurethanharze hergestellten Hybridpolymeren haben bevorzugt einen Gehalt von 0,5 bis 300 mmol, besonders bevorzugt 1 bis 200 mmol und insbesondere bevorzugt 5 bis 75 mmol Silizium pro 100 g Festharz in Form von in den Polyurethanteil eingebundenen Siloxanbrücken (-Si-O-Si-) und/oder in Form von an den Polyurethanteil gebundenen Silanolgruppen.

Die durch Polymerisation in Gegenwart von olefinischen Doppelbindungen freier Polyurethanharze hergestellten Hybridpolymeren bestehen aus Polyurethan- und Polymerisatanteilen. Dabei können Polyurethan- und Polymerisatanteil als interpenetrierendes Netzwerk vorliegen und/oder der Polymerisatanteil ist auf den Polyurethananteil gepfropft.

Bei den beim Aufbau des Polymerisatanteils der Polyurethan/Polymerisat-Polymerhybriden B) zur Polymerisation gelangenden olefinischen Doppelbindungen der olefinisch ungesättigten Monomeren handelt es sich um allylische und/oder vinylische Doppelbindungen und/oder um alpha, beta-olefinisch ungesättigte Carbonylgruppen, beispielsweise bevorzugt (meth)acrylische Doppelbindungen. Dabei beträgt der Anteil allylischer Doppelbindungen bevorzugt unter 10 %, während es sich bevorzugt zu mindestens 50 %. bevorzugt zu mehr als 70 % um (Meth)acryloylgruppen handelt. Sind mehr als 50 % der an der Polymerisation beteiligten olefinischen Doppelbindungen (Meth)acryloylgruppen, so handelt es sich bei den Hybridpolymeren B) um Polyurethan/Poly(meth)acrylat-Polymerhybride.

Die in den erfindungsgemäßen wäßrigen Metallicbasislacken eingesetzte Bindemitteldispersion auf der Basis von Polyurethan/Polymerisat-Polymerhybriden B) weist beispielsweise eine auf Festharz bezogene Säurezahl von 1.5 bis 60 mg KOH/g, bevorzugt 3 bis 40 mg KOH/g auf. Bevorzugt sind die Säuregruppen zu mindestens 70 %, besonders bevorzugt ausschließlich Bestandteil des Polyurethananteils. Die Säuregruppen dienen der Stabilisierung der Polymerhybridteilchen in der wäßrigen Phase. Die Polyurethan/Polymerisat-Polymerhybriden B) können zusätzliche stabilisierende hydrophile nichtionische Gruppen enthalten, beispielsweise Polyalkylenoxidgruppen, wie z.B. Polyethylenoxidgruppen, wie sie für diesen Zweck üblich sind.

Die in den erfindungsgemäßen wäßrigen Metallicbasislacken eingesetzte Bindemitteldispersion auf der Basis von Polyurethan/Polymerisat-Polymerhybriden B) weist beispielsweise eine auf Festharz bezogene Hydroxylzahl von 0 bis 150, bevorzugt unter 100 mg KOH/g auf, und kann aus dem Polyurethananteil und/oder aus dem Polymerisatanteil herrühren.

Die wäßrigen Bindemitteldispersionen auf der Basis von Polyurethan/Polymerisat-Polymerhybriden B) können beispielsweise hergestellt werden, indem man ein Säuregruppen enthaltendes und durchschnittlich 0,1 bis 2 einer radikalischen Polymerisation zugängliche olefinische ungesättigte Gruppen pro Molekül aufweisendes oder von olefinischen Doppelbindungen freies Polyurethan-Prepolymer, das durchschnittlich 0,7 bis 9 an Silizium gebundene R'O-Gruppen pro Molekül aufweist, worin
R' = C1- bis C8-Alkyl oder C(O)R''', und
R''' = C1- bis C10-Alkyl
bedeuten, und das in einem gegenüber Isocyanat inerten Lösemittel gelöst vorliegen kann, gegebenenfalls nach vorheriger Neutralisation der Säuregruppen durch Zusatz von Wasser in eine wäßrige Dispersion überführt und danach gemeinsam mit olefinisch ungesättigten Monomeren einer radikalischen Polymerisation unterwirft. Dabei können die olefinisch ungesättigten Monomeren vor und/oder nach Herstellung der wäßrigen Dispersion zugesetzt werden. Beispielsweise können die oder ein Teil der olefinisch ungesättigten Monomeren vor der Herstellung der wäßrigen Dispersion die Funktion eines gegenüber Isocyanat inerten Lösemittels übernehmen, welches nicht wieder entfernt werden muß.

Bevorzugt erfolgt die Herstellung der Säuregruppen enthaltenden Polyurethan-Prepolymeren mit durchschnittlich 0,7 bis 9 bevorzugt an laterales und/oder terminales Silizium gebundenen R'O-Gruppen pro Molekül und gegebenenfalls durchschnittlich 0,1 bis lateralen und/oder terminalen einer radikalischen Polymerisation zugänglichen olefinisch ungesättigten Gruppen pro Molekül durch
1) Herstellung eines linearen oder verzweigten, nicht gelierten, von olefinischen Doppelbindungen freien, Säuregruppen enthaltenden sowie isocyanatfunktionellen Polyurethan-Prepolymeren in einem inerten organischen Lösemittel(gemisch) und/oder in einem oder mehreren im Gemisch vorliegenden gegenüber Isocyanat inerten olefinisch ungesättigten Monomeren oder in Abwesenheit von Lösemitteln und olefinisch ungesättigten Monomeren,
2) Umsetzung der freien Isocyanatgruppen des so erhaltenen Polyurethan-Prepolymeren
a1) mit einer oder mehreren Verbindungen der allgemeinen Formel

   ((H-X-)ₙR)ₐSi(OR')_{b}(R'')_{c} (I)

   mit X = O,S,NH oder NR^{iv}, bevorzugt NH oder NR^{iv}, R = ein bifunktioneller, trifunktioneller oder tetrafunktioneller, bevorzugt bifunktioneller organischer Rest mit einem Molekulargewicht von 13 bis 500, bevorzugt (Ar)alkylen mit 1 bis 12 C-Atomen, besonders bevorzugt Alkylen mit 1 bis 12 C-Atomen, R' = C1- bis C8-Alkyl oder C(O)R''', bevorzugt C1- bis C4-Alkyl, R'' = R''' = C1- bis C10-Alkyl, wobei R'' und R''' gleich oder verschieden sein können, R^{iv} = C1- bis C8-Alkyl, a = 1,2 oder 3, bevorzugt 1, b = 1,2 oder 3, bevorzugt 2 oder 3, c = 0,1 oder 2, n = 1 bis 3, bevorzugt 1 oder 2, besonders bevorzugt 1, wobei mehrere Reste R', R" und R''' gleich oder verschieden sind und worin die Summe aus a plus b plus c vier ergibt,
a2) gegebenenfalls mit einem oder mehreren zur Addition an Isocyanatgruppen befähigten, olefinisch ungesättigten Monomeren,
a3) gegebenenfalls mit einem oder mehreren NH₂- und/oder NH-Gruppen tragenden Alkanolaminen mit einer OH-Funktionalität von mindestens 1, und
a4) gegebenenfalls mit einem oder mehreren aliphatischen C4-C36-Alkoholen und/oder -Aminen.

Die in Verfahrensschritt 1) erfolgende Herstellung des linearen oder verzweigten, nicht gelierten, von olefinischen Doppelbindungen freien, Säuregruppen enthaltenden sowie isocyanatfunktionellen Polyurethan-Prepolymeren kann beispielsweise erfolgen durch Umsetzung von einer oder mehreren Verbindungen mit mindestens zwei gegenüber Isocyanat reaktiven Gruppen, insbesondere einem oder mehreren Polyolen, bevorzugt Diolen, mit einem oder mehreren organischen Polyisocyanaten, bevorzugt Diisocyanaten und mit einer oder mehreren Verbindungen mit mehr als einer, bevorzugt zwei gegenüber Isocyanatgruppen reaktiven Gruppen und mindestens einer Säuregruppe.

Beispielsweise kann ein als Ausgangsprodukt verwendbares, NCO-Gruppen enthaltendes Polyurethan-Prepolymer hergestellt werden durch Umsetzung in wasserfreiem Milieu von b1) mindestens einer linearen oder verzweigten Verbindung, die mindestens zwei gegenüber Isocyanat reaktive Gruppen trägt mit einem gewichtsmittleren Molekulargewicht (Mw) von 60 - 10000, bevorzugt 60 - 6000, b2) mindestens einem organischen Polyisocyanat, insbesondere Diisocyanat und b3) mindestens einer Verbindung mit mehr als einer mit Isocyanat reaktiven Gruppen und mindestens einer Säuregruppe, mit einer zahlenmittleren Molmasse (Mn) bis zu 10000, bevorzugt bis zu 2000 in einem NCO/OH-Verhaltnis von über 1 bis 4:1.

Bevorzugt handelt es sich bei der vorstehend genannten linearen oder verzweigten Verbindung der Komponente b1) um mindestens ein Polyol auf der Basis eines oder mehrerer Polyether, Polyester und/oder Polycarbonate, mit mindestens zwei OH-Gruppen im Molekül und einem Zahlenmittel der Molmasse (Mn) von 600 - 10000, bevorzugt über 1000 und unter 6000, gegebenenfalls unter Mitverwendung von einem oder mehreren zumindest difunktionellen niedermolekularen Alkoholen und/oder Aminen und/oder Aminoalkoholen mit einer Molmasse unter 600, bevorzugt unter 400.

Als Komponente b2) können beliebige organische Polyisocyanate, wie z. B. Diisocyanate eingesetzt werden. Es können aliphatische, cycloaliphatische, aromatische oder araliphatische Diisocyanate eingesetzt werden. Beispiele für geeignete Diisocyanate sind Hexamethylendiisocyanat, Isophorondiisocyanat, Bis-(4-isocyanatocyclohexyl)methan, Bis-(4-isocyanatophenyl)-methan, Tetramethylxylylendiisocyanat und 1,4-Cyclohexylendiisocyanat.

Als Komponente b3) können bevorzugt niedermolekulare Verbindungen verwendet werden, die mehr als eine, bevorzugt zwei oder mindestens zwei mit Isocyanatgruppen reagierende Gruppen und mindestens eine Säuregruppe enthalten. Geeignete mit Isocyanatgruppen reagierende Gruppen sind insbesondere Hydroxylgruppen und primäre und sekundäre Aminogruppen. Als Säuregruppen kommen z. B. Carboxyl-. Phosphorsäure- und Sulfonsäuregruppen in Betracht. Die bevorzugt einzuführenden Säuregruppen sind Carboxylgruppen; sie können beispielsweise durch Verwendung von Hydroxyalkancarbonsäuren als Komponente b3) eingeführt werden. Bevorzugt sind Dihydroxyalkansäuren, insbesondere alpha,alpha-Dimethylolalkansäuren wie alpha,alpha-Dimethylopropionsäure.

Die Mengen an b1), b2) und b3) werden so gewählt, daß bei der Umsetzung ein Umsetzungsprodukt mit lateralen und/oder terminalen NCO-Gruppen entsteht, d. h. es wird mit einem Polyisocyanatüberschuß gearbeitet. Man kann mit einem NCO- zu OH-Verhältnis von über 1 bis 4 : arbeiten, bevorzugt ist der Bereich von 1,1 bis 2 : 1, besonders bevorzugt von 1,1 bis 1,7 : 1. Das Umsetzungsprodukt kann verzweigt aufgebaut sein, bevorzugt ist es im allgemeinen aber linear aufgebaut mit terminalen NCO-Gruppen.

Das in Verfahrensschritt 1) erhaltene NCO-Gruppen enthaltende Polyurethan-Prepolymer wird in Verfahrensschritt 2)
a1) mit einer oder mehreren Verbindungen der allgemeinen Formel

   ((H-X-)ₙR)ₐSi(OR')_{b}(R'')_{c} (I)

   mit X = O,S,NH oder NR^{iv}, bevorzugt NH oder NR^{iv}, R = ein bifunktioneller, trifunktioneller oder tetrafunktioneller, bevorzugt bifunktioneller organischer Rest mit einem Molekulargewicht von 13 bis 500. bevorzugt (Ar)alkylen mit 1 bis 12 C-Atomen, besonders bevorzugt Alkylen mit 1 bis 12 C-Atomen, R' = C1- bis C8-Alkyl oder C(O)R''', bevorzugt C1- bis C4-Alkyl, R" = R''' = C1- bis C10-Alkyl, wobei R" und R''' gleich oder verschieden sein können, R^{iv} = C1- bis C8-Alkyl, a = 1,2 oder 3, bevorzugt 1, b = 1,2 oder 3, bevorzugt 2 oder 3, c = 0,1 oder 2, n = 1 bis 3, bevorzugt 1 oder 2, besonders bevorzugt 1, wobei mehrere Reste R', R'' und R''' gleich oder verschieden sind und worin die Summe aus a plus b plus c vier ergibt.
a2) gegebenenfalls mit einem oder mehreren zur Addition an Isocyanatgruppen befähigten, olefinisch ungesättigten Monomeren,
a3) gegebenenfalls mit einem oder mehreren NH₂- und/oder NH-Gruppen tragenden Alkanolaminen mit einer OH-Funktionalität von mindestens 1, und
a4) gegebenenfalls mit einem oder mehreren aliphatischen C4-C36-Alkoholen und/oder -Aminen
zu einem Säuregruppen enthaltenden, R'OSi-funktionalisierten und olefinische Doppelbindungen enthaltenden oder von olefinischen Doppelbindungen freien Polyurethan-Prepolymeren umgesetzt.

Bei den Verbindungen der allgemeinen Formel (I) handeit es sich um Silanderivate, die gegenüber Isocyanatgruppen zur Addition befähigte, aktiven Wasserstoff enthaltende Gruppen vom Typ (H-X-)nR- aufweisen. Als aktiven Wasserstoff enthaltende, funktionelle Gruppen HX- sind Aminogruppen bevorzugt, n besitzt Werte von 1 bis 3, bevorzugt nimmt n den Wert 1 an. Beim Rest R handelt es sich um einen bifunktionellen bis tetrafunktionellen, bevorzugt bifunktionellen organischen Rest, der chemisch inerte Gruppen oder Substituenten tragen kann, mit einem Molekulargewicht von 13 bis 500. Bevorzugt handelt es sich beim Rest R um einen bifunktionellen (Ar)alkylenrest mit 1 bis 12 C-Atomen. Ein Alkylenrest mit 1 bis 12 C-Atomen ist als Rest R besonders bevorzugt.

Weiterhin enthält das Silanderivat der allgemeinen Formel (I) 1 bis 3, bevorzugt 2 oder 3 an Silizium gebundene R'O-Gruppen, wobei R' bevorzugt die Bedeutung von C1- bis C8-Alkyl besitzt.

Als einige bevorzugte Beispiele für Verbindungen (I) seien beta-Aminoethyltriethoxysilan, gamma-Aminopropyltriethoxysilan, gamma-Aminopropyltrimethoxysilan, gamma-Aminopropylethyldiethoxysilan, gamma-Aminopropylphenyldiethoxysilan, gamma-Aminopropyltrimethoxysilan, delta-Aminobutyltriethoxysilan, delta-Aminobutylethyldiethoxysilan, N-(2-Aminoethyl-3-aminopropyl)trimethoxysilan, N-2-Aminoethyl-3-aminopropyl-tris(2-ethylhexoxy)silan, 6-(Aminohexylaminopropyl)trimethoxysilan, N-Aminoethyl-3-aminopropyl-methyldimethoxysilan genannt.

Bei den im optionalen Verfahrensschritt a2) eingesetzten, zur Addition an Isocyanatgrupppen befähigten, olefinisch ungesättigten Monomeren handelt es sich um Verbindungen mit aktivem Wasserstoff und mit bevorzugt nur einer polymerisierbaren olefinischen Doppelbindung im Molekül. Aktiver Wasserstoff ist beispielsweise enthalten in Hydroxylgruppen, NH-Gruppen, NH₂-Gruppen oder Mercaptangruppen.

Bevorzugt sind Verbindungen mit aktivem Wasserstoff in Form von Hydroxylgruppen, bevorzugt mit nur einer Hydroxylgruppe, und mit einer polymerisierbaren olefinischen Doppelbindung im Molekül, insbesondere in Gestalt einer (Meth)acryloylgruppe. Beispiele für solche Verbindungen sind Allylalkohol, insbesondere aber Hydroxyalkyl(meth)acrylate, wie Hydroxyethyl(meth)acrylat, Hydroxypropyl(meth)acrylat oder Butandiolmono(meth)acrylat, Glyzerinmono(meth)acrylat, Addukte von (Meth)acrylsäure an Monoepoxide wie z. B Versaticsäureglycidylester, Addukte von Glycidyl(meth)acrylat an Monocarbonsäuren wie z.B. Essigsäure oder Propionsäure.

Die Umsetzung des NCO-funktionellen Polyurethan-Prepolymeren zum R'OSifunktionalisierten Polyurethan-Prepolymeren erfolgt unter vollständigem Verbrauch der HX-Gruppen der Verbindungen (I) sowie bevorzugt auch der gegenüber Isocyanat reaktiven Gruppen der gegebenenfalls eingesetzten olefinisch ungesättigten Monomeren.

Das der im erfindungsgemäßen wäßrigen Metallicbasislack einsetzbaren Bindemitteldispersion zugrundeliegende Polyurethan/Polymerisat-Hybridpolymere B) kann Hydroxylgruppen besitzen. Ist dieses gewünscht, so kann das NCO-Gruppen enthaltende Polyurethan-Prepolymer bei der Herstellung des R'OSi-funktionalisierten Polyurethan-Prepolymeren im Rahmen des optionalen Verfahrensschrittes a3) mit mindestens einem NH₂- und/oder NH-Gruppen tragenden Alkanolamin mit einer OH-Funktionalität von mindestens 1 umgesetzt werden. Die Umsetzung erfolgt dann unter vollständigem Verbrauch der NH₂- und/oder NH-Gruppen des Alkanolamins.

Bei den NH₂- und/oder NH-Gruppen tragenden Alkanolaminen mit einer OH-Funktionalität von mindestens 1 handelt es sich um Verbindungen, die als Lieferanten für Hydroxylgruppen dienen können und allein oder gemeinsam mit eventuellen Hydroxylgruppen aus dem Polymerisatanteil zur Hydroxylzahl von B) beitragen. Die NH- oder NH₂-Gruppen der Alkanolamine weisen gegenüber den Isocyanatgruppen des NCO-funktionellen PU-Prepolymeren eine im Vergleich zu ihren OH-Gruppen deutlich höhere Reaktivität auf, d. h. bevorzugt reagieren die Aminogruppen mit den Isocyanatgruppen unter Harnstoffbildung.

Beispiele für geeignete Alkanolamine mit einer OH-Funktionalität von mindestens 1 sind Monoalkanolamine und Dialkanolamine, z. B Diethanolamin, N-Methylethanolamin, Diisopropanolamin, N-Ethylisopropanolamin, Monoisopropanolamin, Ethanolamin, 2,2-Aminoethoxyethanol, Monoethylethanolamin, Butylethanolamin, Cyclohexylethanolamin, 3-Aminopropanol, 2-Aminobutanol-1.

Es kann zweckmäßig sein, wenn anstelle der oder gemeinsam mit den NH₂- und/oder NH-Gruppen tragenden Alkanolaminen im optionalen Verfahrensschritt a4) auch ein oder mehrere aliphatische C4-C36-Alkohole und/oder -Amine eingesetzt werden, deren Umsetzung dann in der Regel unter vollständigem Verbrauch ihrer OH-, NHund/oder NH₂-Gruppen erfolgt. Fettamine und/oder Fettalkohole mit mehr als 12 C-Atomen sind bevorzugt. Beispiele sind Laurylalkohol, Stearylalkohol sowie die entsprechenden Amine.

Die Isocyanatgruppen des NCO-funktionellen Polyurethan-Prepolymeren werden mit den HX-Gruppen von (I), den gegenüber Isocyanat reaktiven Gruppen des gegebenenfalls eingesetzten olefinisch ungesättigten Monomeren, den NH-Gruppen des gegebenenfalls eingesetzten Alkanolamins und den gegenüber Isocyanat reaktiven Gruppen des gegebenenfalls eingesetzten C4-C36-Alkohols und/oder -Amins bevorzugt im stöchiometrischen Verhältnis zur Reaktion gebracht. Dabei können gegenüber Isocyanat reaktives olefinisch ungesättigtes Monomer, Alkanolamin, C4-C36-Alkohol und/oder -Amin und die Verbindung (I) in Mischung oder nacheinander in geeigneter Reihenfolge mit dem NCO-funktionellen Polyurethan-Prepolymer umgesetzt werden.

Im so erhaltenen Polyurethan-Prepolymeren gegebenenfalls noch verbliebene restliche freie Isocyanatgruppen können vor der Überführung des Prepolymeren in die Wasserphase mit den üblichen gegenüber Isocyanat zur Addition befähigten, aktiven Wasserstoff enthaltenden Verbindungen umgesetzt werden. Beispiele für geeignete aktiven Wasserstoff enthaltende Verbindungen sind Monoalkohole, Diole, Polyole, Glykolether, Monoamine, Diamine, Polyamine.

Die Umsetzung der zum Aufbau des NCO-funktionellen Polyurethan-Prepolymeren eingesetzten Komponenten als auch die weitere Umsetzung zum R'OSi-funktionalisierten Polyurethan-Prepolymeren erfolgen im wasserfreien Milieu beispielsweise bei Temperaturen von 20 bis 140°C, bevorzugt zwischen 50 und 100°C. Es kann lösemittelfrei gearbeitet werden oder es wird in dem Fachmann an sich geläufigen für die Polyurethansynthese geeigneten organischen Lösemitteln gearbeitet. Als Lösemittel können wassermischbare Lösemittel oder wasserunmischbare Lösemittel eingesetzt werden. Im allgemeinen ist es vorteilhaft, solche Lösemittel zu verwenden, die in jedem Stadium der Herstellung der wäßrigen Bindemitteldispersion B), beispielsweise nach deren Fertigstellung, entfernt werden können, beispielsweise durch Abdestillieren gegebenenfalls unter vermindertem Druck.

Beispiele für geeignete Lösemittel sind Ketone, z. B. Aceton, Methylethylketon, Methylisobutylketon; N-Alkylpyrrolidone, wie z. B. N-Methylpyrrolidon; Ether, wie z. B. Diethylenglykoldimethylether, Dipropylenglykoldimethylether; oder auch cyclische Harnstoffderivate, wie 1,3-Di-methyl-3,4,5,6-tetrahydro-2(1H)-pyrimidinon.

Das so erhaltene Polyurethan-Prepolymere mit durchschnittlich 0,7 bis 9 an Silizium gebundenen R'O-Gruppen pro Molekül wird durch Zusatz von Wasser in eine wäßrige Dispersion überführt, bevorzugt nach teilweiser oder voilständiger Neutralisation seiner Säuregruppen.

Zur Neutralisation dienen Basen, z. B Amine, bevorzugt tertiäre Amine, Beispiele für geeignete Basen sind Ammoniak oder organische Amine wie 2-Amino-2-methylpropanol-1, Trialkylamine, wie Trimethylamin, Triethylamin, Triisopropylamin; N-Alkylmorpholine, wie N-Methylmorpholin; N-Dialkylalkanolamine, wie N-Dimethylethanolamin und N-Dimethylisopropanolamin und deren Mischungen.

Die Überführung in die wäßrige Dispersion kann so erfolgen, daß das Polyurethan-Prepolymer mit Wasser vermischt wird. Dazu kann zunächst ein Teil der gesamten Wassermenge oder die gesamte Wassermenge auf einmal mit dem Polyurethan-Prepolymer vermischt werden. Das Wasser kann zum Harz gegeben werden. Ebenso möglich ist die Zügabe des Harzes zum Wasser.

Die R'OSi-Gruppen des Polyurethan-Prepolymeren sind hydrolyseempfindlich. Über den Verlauf der Wasserzugabe können unterschiedliche Produkte erhalten werden. Beispielsweise kann gesteuert werden, ob das Hybridbindemittel B) Silizium in Form von in den Polyurethanteil eingebundenen Siloxanbrücken (-Si-O-Si-) oder in Form von an den Polyurethanteil gebundenen Silanolgruppen enthält bzw. wie das Verhältnis von Siloxanbrücken zu Silanolgruppen liegt.

Soll das Hybridpolymere B) Silizium in Form von Silanolgruppen, beispielsweise im wesentlichen nur in Form von Silanolgruppen enthalten, so ist es wesentlich, daß innerhalb kurzer Zeit eine solche Menge an Wasser zugegeben wird, die ausreichend ist, eine weitere Reaktion der durch Hydrolyse gebildeten Silanolgruppen zu verhindern. Die Wasserzugabe erfolgt in mehr als zehnfachem stöchiometrischen Überschuß der zur Hydrolyse der R'OSi-Gruppen notwendigen Wassermenge. Bevorzugt wird der mindestens 50-fache stöchiometrische Überschuß zugesetzt. Besonders bevorzugt erfolgt der Wasserzusatz in einer solchen Menge, daß mindestens die Hälfte der zur Herstellung der wäßrigen Dispersion benötigten Wassermenge auf einmal zugesetzt wird. Durch Zusatz der ausreichenden Wassermenge wird eine unter Wasserabspaltung verlaufende Kondensation der durch Hydrolyse gebildeten Silanolgruppen zu Siloxanbrücken weitestgehend vermieden, d. h. man erhält eine wäßrige Dispersion eines Polyurethanharzes, das praktisch frei ist von Siloxanbrücken und das Silanolgruppen enthält.

Bevorzugt jedoch wird das Polyurethan-Prepolymer einer Kettenverlängerung unter Siloxanbrückenbildung unterzogen, indem man eine geringe zur Überführung in die wäßrige Phase nicht ausreichende Menge an Wasser, beispielsweise bevorzugt in mindestens stöchiometrischer Menge zur Hydrolyse der R'OSi-Gruppen zusetzt und das Reaktionsprodukt während oder nach der Kettenverlängerung gegebenenfalls nach vollständiger oder teilweiser Neutralisation in eine wäßrige Dispersion überführt. Die Kettenverlängerung des R'OSi-funktionalisierten Polyurethan-Prepolymeren erfolgt nach Zugabe eines bevorzugt bis zu maximal zehnfachen stöchiometrischen Überschusses, besonders bevorzugt bis zu maximal fünffachen stöchiometrischen Überschusses, berechnet auf die zur Hydrolyse der R'OSi-Gruppen notwendige Wassermenge. Die Hydrolyse der R'OSi-Gruppen läuft schnell ab. Die durch Hydrolyse gebildeten Silanolgruppen kondensieren unter Wasserabspaltung zu Siloxanbrücken und führen damit zu einem kettenverlängerten Polyurethanharz, das praktisch frei ist von Silanolgruppen, beispielsweise liegen über 80%, insbesondere über 90% des Siliziums als Siloxanbrücken gebunden vor. Abhängig vom eingesetzen R'OSi-funktionalisierten Polyurethan-Prepolymeren werden dabei lineare, verzweigte oder vernetzte Produkte gewonnen.

Die Überführung des gegebenenfalls neutralisierten Reaktionsprodukts in eine wäßrige Dispersion unter Zusatz einer ausreichenden Wassermenge kann während oder nach der Kettenverlängerung erfolgen und die Ausbildung der Siloxanbrücken erfolgt in der dispergierten oder nicht-dispergierten Harzphase, d. h. die Kettenverlängerung läuft in der Harzphase ab; wenn also das Harz bereits durch Zugabe einer ausreichenden Wassermenge dispergiert ist, so läuft die Kettenverlängerung in den Dispersionsteilchen selbst ab.

Die Hydrolysereaktion sowie die damit gegebenenfalls verlaufende Kettenverlängerung kann, falls gewünscht, bei erhöhter Temperatur durchgeführt werden. Beispielsweise sind Temperaturen bis zu 95 °C geeignet.

Die Herstellung der wäßrigen Dispersion des Siloxanbrücken und/oder Silanolgruppen aufweisenden Polyurethanharzes kann nach üblichen Verfahren erfolgen. Beispielsweise ist es möglich, die neutralisierten Harze vorzulegen und unter gutem Dispergieren mit Wasser zu versetzen. Ebenso kann die gegebenenfalls Neutralisationsmittel enthaltende Wasserphase vorgelegt und unter Ruhren das Harz eingearbeitet werden. Ebenso ist eine kontinuierliche Arbeitsweise möglich, d. h. es werden in bekannten Aggregaten, z. B. einem Rotor-Statormischer, gleichzeitig Harz, Wasser und Neutralisationsmittel homogen zusammengemischt. Die Überführung in die Wasserphase kann durch erhöhte Temperatur unterstützt werden.

Das lösemittelfrei oder in organischer Lösung vorliegende Polyurethanharz wird durch Zugabe ausreichender Wassermengen in die wäßrige Phase überführt. Die Zugabe der zur Überführung in die wäßrige Phase ausreichenden Wassermenge kann nach Abschluß der Kettenverängerung erfolgen. Es ist auch möglich die Hauptwassermenge während der Kettenverlängerung bzw. nach der Hydrolyse der R'OSi-Gruppen zuzugeben.

Nach Erstellung der wäßrigen Dispersion des Siloxanbrücken und/oder Silanolgruppen, bevorzugt im wesentlichen nur Siloxanbrücken aufweisenden Polyurethanharzes erfolgt die letzte Synthesestufe bei der Herstellung der Bindemitteldispersion B). Dabei handelt es sich um den Aufbau des Polymerisatanteils des Polyurethan/Polymensat-Polymerhybrid-Bindemittels B) durch radikalische Polymerisation nach an sich bekannten Methoden. Bei der radikalischen Polymerisation kann es sich um eine Copolymerisation bzw. Pfropfpolymerisation der olefinisch ungesättigten Monomeren mit den bzw. auf die lateralen und/oder terminalen olefinischen Doppelbildungen des Polyurethanharzes handeln, oder es handelt sich um eine in Gegenwart des wäßrig dispergierten Siloxanbrücken und/oder Silanolgruppen aufweisenden und von olefinischen Doppelbindungen freien Polyurethanharzes ablaufende Polymerisation der zum Aufbau des Polymerisatanteils des Polyurethan/Polymerisat-Polymerhybrid-Bindemittels B) verwendeten olefinisch ungesättigten Monomeren, oder es handelt sich um eine durch H-Abstraktion vom wäßrig dispergierten Siloxanbrücken und/oder Silanolgruppen aufweisenden und von olefinischen Doppelbindungen freien Polyurethanharz eingeleitete Pfropfpolymerisation der zum Aufbau des Polymerisatanteils des Polyurethan/Polymerisat-Polymerhybrid-Bindemittels B) verwendeten olefinisch ungesättigten Monomeren auf den Polyurethananteil des Polyurethan/Polymerisat-Polymerhybrid-Bindemittels B). Werden bei der radikalischen Polymerisation der olefinisch ungesättigten Monomere auch polyungesättigte Monomere verwendet, so kann die radikalische Polymerisation so erfolgen, daß die polyungesättigten Monomeren unter vollständigem Verbrauch ihrer olefinischen Doppelbindungen einpolymerisiert werden oder daß ein Teil der polyungesättigten Monomeren unter unvollständigem Verbrauch ihrer olefinischen Doppelbindungen einpolymerisiert wird. Beispielsweise kann ein Teil der polyungesättigten Monomeren mit nur einem Teil ihrer jeweiligen ungesättigten Gruppen einpolymerisiert werden, so daß der Polymerisatanteil des resultierenden Polyurethan/Polymerisat-Polymerhybriden B) noch olefinische Doppelbindungen aufweisen kann.

Die radikalische Polymerisation wird beispielsweise bei Temperaturen zwischen 20 und 95 °C, bevorzugt zwischen 60 und 90 °C, durchgeführt.

Es sind übliche Radikalinitiatoren geeignet, die in üblichen Mengen eingesetzt werden können; Beispiele sind Peroxidverbindungen wie Dialkylperoxide, Diacylperoxide, organische Hydroperoxide, Perester, Ketonperoxide; Azoverbindungen, wie Azobisisobutyronitril. Bevorzugt sind wasserlösliche Radikalinitiatoren wie beispielsweise Wasserstoffperoxid, Ammoniumperoxodisulfat, Ammoniumpersulfat, Ammoniumsalze der 4,4'-Azobis(4'-cyanpentansäure). 2,2'-Azobis(2-methyl-N-1,1-bis(hydroxymethyl)ethyl)propionamide, 2,2'-Azobis(2-methyl-N-2-hydroxyethyl)propionamide.

Ebenfalls möglich ist es, die Polymerisation als Redoxpolymerisation durchzuführen unter Verwendung entsprechender Redoxinitiatorsysteme wie beispielsweise Natriumsulfit, Natriumdithionit, Ascorbinsäure und Peroxidverbindungen.

Als radikalisch polymerisierbare, olefinisch ungesättigte Monomere können solche verwendet werden, die keine funktionellen Gruppen tragen. Beispiele sind monovinylaromatische Verbindungen vorzugsweise mit 8 bis 10 Kohlenstoffatomen je Molekül, wie Styrol, Vinyltoluol; Vinylether und Vinylester, wie Vinylacetat, Vinylversatat; Malein-, Fumar-, Tetrahydrophthalsäuredialkylester, insbesondere aber (Cyclo)alkyl(meth)acrylate, wie Methyl(meth)acrylat, Ethyl(meth)acrylat, Propyl(meth)acrylat, Butyl(meth)acrylat, Hexyl(meth)acrylat, Cyclohexyl(meth)acrylat, Ethylhexyl(meth)acrylat, Dodecyl(meth)acrylat, Lauryl(meth)acrylat, Isobornyl(meth)acrylat.

Neben den nichtfunktionellen Monomeren können auch olefinisch ungesättigte Monomere mit funktionellen Gruppen eingesetzt werden. Beispiele sind selche mit CH-aciden, Epoxid-, Hydroxy- oder Carboxylgruppen, wobei zu beachten ist, daß die carboxyfunktionellen Monomeren bevorzugt zu nicht mehr als 30 % der Säurezahl des Polyurethan/Polymerisat-Polymerhybrid-Bindemittels B) beitragen sollen.

Beispiele für olefinisch ungesättigte Monomere mit Hydroxylgruppen, die alleine oder gemeinsam mit eventuellen Hydroxylgruppen aus dem Polyurethananteil zur Hydroxylzahl des Hybridpolymeren B) beitragen können, sind Allylalkohol, insbesondere aber Hydroxyalkyl(meth)acrylate, wie Hydroxyethyl(meth)acrylat, Hydroxypropyl(meth)acrylat oder Butandiolmono(meth)acrylat, Glyzerinmono(meth)acrylat, Addukte von (Meth)acrylsäure an Monoepoxide wie z. B. Versaticsäureglycidylester, Addukte von Glycidyl(meth)acrylat an Monocarbonsäuren wie z. B. Essigsäure oder Propionsäure.

Beispiele für carboxylgruppenhaltige olefinisch ungesättigte Monomere sind ungesättigte Carbonsäuren, wie z. B. (Meth)acryl-, Itacon-. Croton-. Isocroton-, Aconit-, Malein- und Fumarsäure, Halbester der Malein- und Fumarsäure,

Weiterhin können auch kleine Anteile von Monomeren mit mindestens zwei polymerisierbaren, olefinischen Doppelbindungen eingesetzt werden. Bevorzugt liegt der Anteil dieser Monomeren unter 5 Gew.-% bezogen auf das Gesamtgewicht der Monomeren. Beispiele für derartige Verbindungen sind Divinylbenzol, Hexandioldi(meth)acrylat, Ethylenglykoldi(meth)acrylat, Butandioldi(meth)acrylat, Trimethylolpropantri(meth)acrylat und ähnliche Verbindungen.

Der Festkörpergehalt der in den erfindungsgemäßen wäßrigen Metallicbasislacken eingesetzten Bindemitteldispersionen B) beträgt zwischen 25 und 65 Gew.-%, bevorzugt über 35 und unter 60 Gew.-%.

Zur Herstellung der erfindungsgemäßen wäßrigen Metallicbasislacke werden Metalleffektpigmente mit den wäßrigen Bindemitteldispersionen A) und B) sowie gegebenenfalls mit weiteren Bindemitteln, Vernetzern, Pigmenten, Füllstoffen, lacküblichen Additiven und Lösemitteln vermischt.

Die erfindungsgemäßen wäßrigen Metallicbasislacke können neben den wäßrigen Bindemitteldispersionen A) und B) ein oder mehrere davon unterschiedliche zusätzliche Bindemittel C) enthalten, wozu auch gegebenenfalls in den erfindungsgemäßen wäßrigen Metallicbasislacken enthaltene Pastenharze zählen. Dabei beträgt der Mengenanteil von C) in den erfindungsgemäßen wäßrigen Metallicbasislacken 0 bis 50 Gew.-%, bezogen auf die Summe aus A) und B).

Beispiele für solche zusätzliche von A) und B) unterschiedliche Bindemittel C) sind dem Fachmann geläufige übliche filmbildende wasserlösliche oder wasserverdünnbare Bindemittel, wie wasserverdünnbare Polyesterharze, wasserverdünnbare Polyacrylatharze, wasserverdünnbare Polyurethanharze und/oder solche wasserverdünnbaren Bindemittel, in denen (Meth)acrylcopolymer und Polyurethanharz kovalent oder in Form interpenetrierender Harzmoleküle verbunden vorliegen. Es kann sich um reaktive oder nicht-funktionelle Harze handeln, sie können auch als vernetzte oder unvernetzte Polymermikroteilchen vorliegen.

Zur Bereitung der erfindungsgemäßen wäßrigen Metallicbasislacke können verschiedene Vernetzer, wie beispielsweise Amin-Formaldehydkondensationsharze, z.B. Melaminharze, sowie freie oder blockierte Polyisocyanate verwendet werden. Die Vernetzer können einzeln oder im Gemisch eingesetzt werden. Das Mischungsverhältnis Vernetzer zu Bindemittel A) plus B) plus C) beträgt bevorzugt 10 : 90 bis 40 : 60, besonders bevorzugt 20 : 80 bis 30 : 70, jeweils bezogen auf das Festkörpergewicht.

Die erfindungsgemäßen wäßrigen Metallicbasislacke enthalten ein oder mehrere Metalleffektpigmente. Beispiele für Metalleffektpigmente sind die üblichen dem Fachmann für diesen Zweck bekannten Metallpigmente, z.B, aus Aluminium, Kupfer oder anderen Metallen, insbesondere in Form von Metallplättchen mit Teilchengrößen von in der Regel zwischen 5 und 40 µm. Die Metalleffektpigmente werden im allgemeinen in Form einer handelsüblichen wäßrigen oder nicht-wäßrigen Paste vorgelegt, bevorzugt mit wasserverdünnbaren, organischen Lösemitteln und Additiven versetzt und danach mit den wäßrigen Bindemitteln A), B) sowie gegebenenfalls C) unter Scheren vermischt. Die Bindemittel A), B) sowie gegebenenfalls C) können dabei auch als Mischung verwendet werden. Pulverförmige Metalleffektpigmente können zunächst mit bevorzugt wasserverdünnbaren organischen Lösemitteln und Additiven zu einer Paste verarbeitet werden.

Die erfindungsgemäßen wäßrigen Metailicbasislacke können neben den Metalleffektpigmenten ein oder mehrere anorganische und/oder organische farb- und/oder effektgebende Pigmente und gegebenenfalls zusätzlich mindestens einen Füllstoff enthalten.

Beispiele für effektgebende Pigmente neben den Metalleffektpigmenten sind Interferenzpigmente wie z. B. metalloxidbeschichtete Metallpigmente, z. B titandioxidbeschichtetes Aluminium, beschichtete Glimmer wie z.B. titandioxidbeschichteter Glimmer und Graphiteffektpigmente. Beispiele für farbgebende Pigmente und Füllstoffe sind Titandioxid, mikronisiertes Titandioxid, Eisenoxidpigmente, Ruß, Siliciumdioxid, Bariumsulfat, mikronisierter Glimmer, Talkum, Kaolin, Kreide, Azopigmente, Phthalocyaninpigmente, Chinacridonpigmente, Pyrrolopyrrolpigmente, Perylenpigmente.

Die Interferenzpigmente werden ebenso wie die Metalleffektpigmente als Paste mit den wäßrigen Bindemitteln A), B) und gegebenenfalls C) unter Scheren vermischt, Farbpigmente und/oder Füllstoffe können beispielsweise in einem Teil der wäßrigen Bindemittel A), B) und gegebenenfalls C) angerieben werden. Bevorzugt kann das Anreiben auch in einem speziellen wasserverdünnbaren Pastenharz, das den Bindemitteln C) zuzurechnen ist, geschehen. Ein Beispiel für in den erfindungsgemäßen wäßrigen Metallicbasislacken bevorzugt einsetzbares Pastenharz auf Polyurethanbasis findet sich in der DE-A-40 00 889. Das Anreiben kann in üblichen, dem Fachmann bekannten Aggregaten erfolgen. Danach wird mit dem restlichen Anteil der wäßrigen Bindemittel A), B) und gegebenenfalls C) oder des wäßrigen Pastenharzes zur fertigen Farbpigmentanreibung komplettiert.

Weiterhin können die erfindungsgemäßen wäßrigen Metallicbasislacke lacktechnische Additive enthalten, beispielsweise rheologiebeeinflussende Mittel, wie hochdisperse Kieselsäure, anorganische Schichtsilikate oder polymere Harnstoffverbindungen. Als Verdicker wirken auch beispielsweise wasserlösliche Celluloseether wie Hydroxyethylcellulose. Methylcellulose oder Carboxymethylcellulose, sowie synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxylierte Polyurethane oder Polyacrylate. Daneben können auch Antiabsetzmittel, Verlaufsmittel, Lichtschutzmittel, Katalysatoren, Antischaummittel, wie beispielsweise silikonhaltige Verbindungen, Netzmittel sowie haftvermittelnde Substanzen eingesetzt werden.

Der Lösemittelanteil der erfindungsgemäßen wäßrigen Metallicbasislacke beträgt bevorzugt unter 20 Gew.-%, besonders bevorzugt unter 15 Gew.-%, insbesondere bevorzugt unter 10 Gew.-%. Es handelt sich um übliche lacktechnische Lösemittel, diese können von der Herstellung der Bindemittel stammen oder sie werden separat zugegeben. Beispiele für solche Lösemittel sind ein- oder mehrwertige Alkohole, z. B. Propanol, Butanol, Hexanol; Glykolether oder -ester, z. B. Diethylenglykoldialkylether, Dipropylenglykoldialkylether, jeweils mit C1-C6-Alkyl, Ethoxypropanol, Butylglykol; Glykole z. B. Ethylenglykol, Propylenglykol, und deren Oligomere, N-Alkylpyrrolidone, wie z. B. N-Methylpyrroliden sowie Ketone wie Methylethylketon, Aceton, Cyclohexanon; aromatische oder aliphatische Kohlenwasserstoffe, z.B. Toluol, Xylol oder lineare oder verzweigte aliphatische C6 - C12-Kohlenwasserstoffe.

Die erfindungsgemäßen wäßrigen Metallicbasislacke enthalten Basen als Neutralisationsmittel, beispielsweise die gleichen wie schon vorstehend als Neutralisationsmittel für die Bindemittel A) und B) erwähnt.

Die erfindungsgemäßen wäßrigen Metallicbasislacke besitzen beispielsweise einen Festkörpergehalt von 10 bis 40, bevorzugt von 15 bis 30 Gew.-%. Das Verhältnis von Pigment (einschließlich Füllstoffe) zu Bindemittel plus gegebenenfalls Vernetzer beträgt beispielsweise zwischen 0,03 : 1 bis 0,6 : 1, jeweils bezogen auf das Festkörpergewicht.

Die erfindungsgemäßen wäßrigen Metallicbasislacke werden bevorzugt bei der Herstellung von Mehrschichtlackierungen eingesetzt, wobei die mit ihnen erstellten Metalleffektschichten mit transparenten Klarlacken überlackiert werden. Die erfindungsgemäßen wäßrigen Metallicbasislacke können nach üblichen Methoden appliziert werden. Bevorzugt werden sie durch Spritzen in einer Trockenschichtdicke von 8 bis 30 µm appliziert. Die Applikation erfolgt bevorzugt im Naß-in-Naß-Verfahren. d. h. nach einer Ablüftphase, z. B. bei 20 bis 30 °C, werden die Metallicbasislackschichten mit einem üblichen Klarlack in einer Trockenschichtdicke von bevorzugt 30 bis 60 µm überlackiert und gemeinsam mit diesem bei Temperaturen von beispielsweise 20 bis 150 °C getrocknet oder vernetzt. Die Trocknungsbedingungen richten sich nach dem verwendeten Klarlacksystem. Für Reparaturzwecke sind beispielsweise Temperaturen von 20 bis 80 °C bevorzugt. Für Zwecke der Serienlackierung sind Temperaturen über 100 °C, beispielsweise über 110 °C bevorzugt.

Als Klarlack sind grundsätzlich alle bekannten Klarlacke oder transparent pigmentierten Überzugsmittel geeignet. Hierbei können sowohl lösungsmittelhaltige 1-oder 2-Komponenten-Klarlacke, wasserverdünnbare Klarlacke, Pulverklarlacke, wäßrige Pulverklarlackslurries oder durch Strahlung härtbare Klarlacke eingesetzt werden.

Unter Verwendung der erfindungsgemäßen wäßrigen Metallicbasislacke erstellte Mehrschichtlackierungen können auf verschiedenste Arten von Substraten aufgebracht werden. Im allgemeinen handelt es sich um metallische oder Kunststoff-Untergründe. Diese sind häufig vorbeschichtet, d. h. Kunststoffsubstrate können z. B. mit einer Kunststoffgrundierung versehen sein, metallische Substrate besitzen im allgemeinen eine elektrophoretisch aufgebrachte Grundierung und gegebenenfalls zusätzlich eine oder mehrere weitere Lackschichten, wie z. B. eine Füllerschicht. Diese Schichten sind im allgemeinen ausgehärtet.

Die erfindungsgemäßen wäßrigen Metallicbasislacke sind geeignet für die Fahrzeugerstlackierung und -reparaturlackierung, sie können jedoch auch in anderen Bereichen, z. B. der Kunststofflackierung, insbesondere der Fahrzeugteilelackierung, eingesetzt werden.

Die erfindungsgemäßen wäßrigen Metallicbasislacke besitzen ein hervorragendes Deckvermögen im Vergleich zu solchen des Standes der Technik. Sie erlauben eine Einsparung von teurem Metalleffektpigment, da sie im Vergleich zu wäßrigen Metallicbasislacken des Standes der Technik mit geringeren Mengen an Metalleffektpigment formuliert werden können bzw. aufgrund ihres höheren Deckvermögens in niedrigerer Schichtdicke appliziert werden können. Mit ihnen hergestellte Zweischichtmetalliclackierungen zeichnen sich aus durch vergleichsweise hohe Helligkeit und Brillianz; der mit ihnen erreichbare Metalleffekt ist stark ausgeprägt. Ein weiterer Vorteil der erfindungsgemäßen wäßrigen Metallicbasislacke liegt darin, daß sie auch mit Metalleffektpigmentchargen minderer Qualität zubereitet werden können. Unter Metalleffektpigmentchargen minderer Qualität sind beispielsweise farbschwache Metalleffektpigmentchargen zu verstehen. Beispielsweise kann es sich um Metalleffektpigmentchargen handeln mit einer außerhalb üblicher Toleranzen liegenden Teilchengrößenverteilung und/oder mit Anteilen von Metallpigmenten, die bezüglich ihrer Form außerhalb des Sollbereichs liegen, beispielsweise von der idealen Plättchenform abweichen Es kann sich beispielsweise auch um solche handeln, die nicht die gewünschte Oberflächenbeschaffenheit, z.B. Benetzbarkeit, besitzen. Mit der vorliegenden Erfindung ist es möglich auch bei Verwendung solcher Metalleffektpigmentchargen minderer Qualität Lackierergebnisse zu erzielen, die mit wäßrigen Metallicbasislacken des Standes der Technik erzielten Lackierergebnissen ebenbürtig sind.

### Referenz Beispiel 1 (Herstellung eines Bindemittels A)):

a) Herstellung eines carboxyfunktionellen, epoxidgruppenhaltigen Polymeren:
   In eine Lösung von 141 g eines Polyesters (OH-Zahl = 88 mg KOH/g), hergestellt auf der Basis von Phthalsäureanhydrid, Isophthalsäure, Maleinsäureanhydrid, Propanol und Glycerin wie in der DE-A-28 11 913 beschrieben, in 70 g Methylethylketon, wurden 100 g eines Anhydridgemisches (SZ/H₂O = 486 mg KOH/g, hergestellt durch Umsetzung von Trimellithsäureanhydrid mit Propandiol-1,2, bestehend somit aus Trimellithsäureanhydrid und Anhydriden der nachstehenden Formeln 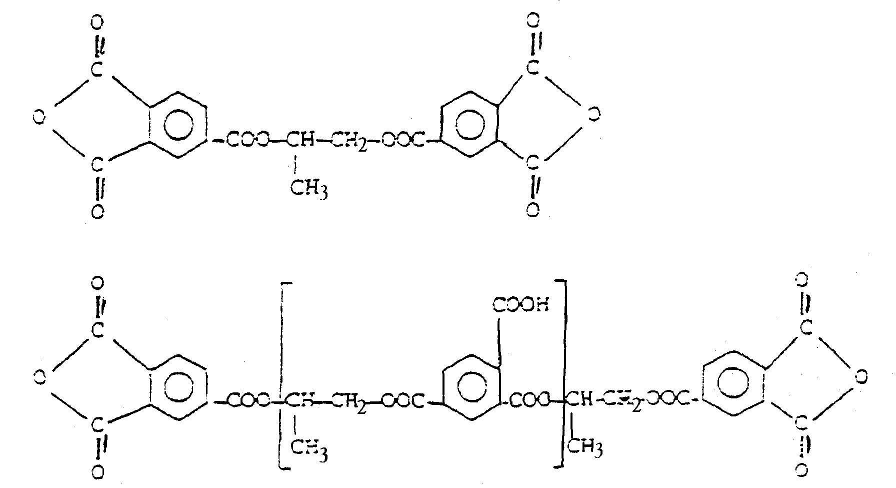 x = 1 bis 8
   die in 108 g Xylol bei 50°C homogenisiert worden waren, innerhalb 1 Stunde zugetropft. Bei 90°C wurde so lange gerührt, bis das Reaktionsgemisch eine Säurezahl in Wasser von 165 mg KOH/g (100 %iges Harz) erreicht hatte. Danach wurden 12 g Wasser zugemischt und nach 6-stündigem Rühren bei 80°C eine Säurezahl in Butanol von 168 mg KOH/g (100 %iges Harz) erreicht. Die Gemischtemperatur wurde auf 60°C gesenkt und nach Zugabe von 0.3 g Lithiumbenzoat 132 g eines epoxydierten Leinöls (Epoxidzahl = 8,7) innerhalb von 2 Stunden zugetropft und die Mischung so lange gerührt, bis die Säurezahl in Butanol auf 86,5 abgesunken war. Anschließend wurde eine Mischung von 42 g Dimethylamin (60 %ig in Wasser) in 360 g Wasser eingerührt. Es wurde eine hellgelbe, opaleszierende Lösung erhalten, aus der bei 0.1 bar und 40°C das organische Lösungsmittel abdestilliert wurde. Nach Filtration wurde eine gelbliche, praktisch klare wäßrige Harzlösung erhalten, Festkörpergehalt: 32 Gew -% (1 Stunde bei 125°C).
b) Herstellung einer Polymerisatdispersion
   In einen Reaktor, ausgerüstet mit Rührer, Rückflußkühler, Innenthermometer und Dosiervorrichtung für die Monomeren, sowie den Initiator, wurden 705 g der in a) erhaltenen wäßrigen (32 %igen) Dispersion und 196 g Wasser gefüllt. Diese Mischung wurde unter Rühren auf 80°C erwärmt und eine Lösung von 0.5 g Ammoniumperoxydisulfat in 35 g Wasser zugesetzt. 5 Minuten nach der Zugabe des Initiators wurden 35 g einer Monomerenmischung aus 125 g Methylmethacrylat, 94 g n-Butylacrylat und 17 g Glycidylmethacrylat zugesetzt und nach weiteren 15 Minuten Vorpolymerisation wurde die verbliebene Monomermenge über 2 Stunden zudosiert, 10 Minuten nach Beendigung der Zugabe wurden weitere 0.2 g Ammoniumperoxydisulfat, gelöst in 10 g Wasser, innerhalb von 10 Minuten zugesetzt und der Ansatz noch 2 Stunden bei 80°C gerührt, um vollständigen Umsatz zu erzielen. Es resultierte eine stabile wäßrige Dispersion, die mit deionisiertem Wasser auf einen Feststoffgehalt von 40 Gew.-% eingestellt wurde.

### Referenz Beispiel 2 (Herstellung eines Bindemittels B)):

145,4 g eines Polyesters aus Adipinsäure, Neopentylglykol und Isophthalsäure (OH-Zahl : 109 mg KOH/g) und 8 g Dimethylolpropionsäure werden in 69,6 g N-Methylpyrrolidon gelöst und auf 40°C erwärmt. Danach werden 55,8 g Isophorondiisocyanat so zugegeben, daß eine Reaktionstemperatur von 80°C nicht überschritten wird. Es wird solange gehalten bis ein NCO-Gehalt von 2 % (bezogen auf Festharz und bestimmt nach DIN 53185) erreicht ist. Danach werden nacheinander 7 g 3-Aminopropyltriethoxysilan, 12,2 g Dodecanol und 2 g Hydroxyethylmethacrylat zugegeben. Die Reaktionsmischung wird solange bei 80°C gehalten bis keine freien NCO-Gruppen mehr nachweisbar sind (Titration). Dann werden 128 g Methylmethacrylat zugegeben. Es werden 5,4 g Triethylamin und 5,4 g deionisiertes Wasser zugegeben und gut eingearbeitet. Nach der Zugabe von 864 g deionisierten Wassers erhält man eine feinteilige wäßrige Dispersion. Nun werden 250 g Butylacrylat, 125 g tert.-Butylacrylat und eine Lösung aus 62 g deionisierten Wassers und 2 g Ammoniumperoxodisulfat bei 80°C über 2 h kontinierlich zugegeben. Anschließend wird 3 h bei 80°C gehalten mit deionisiertem Wasser auf einen Festkörper (60' 150°C) von 40 Gew.-% eingestellt.

### Beispiel 1 (Aufschluß von Aluminiumbronze, erfindungsgemäß):

### a) Herstellung einer Bindemittelzubereitung:

12 g deionisiertes Wasser, 32,5 g der Bindemitteldispersion aus Referenz Beispiel 1, 25 g der Bindemitteldispersion aus Referenz Beispiel 2, 20 g einer durch Kettenverlängerung eines carboxylfunktionellen, Isocyanatgruppen enthaltenden Polyurethan-Prepolymeren mit Wasser hergestellten Polyurethandispersion gemäß EP-A-0 581 211. Herstellungsbeispiel 1 (Festkörpergehalt 30 Gew.-%), 4 g Butylglykol und 6,5 g Polyacrylsäureverdicker (mit Dimethylethanolamin auf pH 7,5 eingestellt, Festkörpergehalt 8 Gew.-%) werden miteinander homogen vermischt.

### b) Aluminiumaufschluß:

10 g einer handelsüblichen Aluminiumpaste mit einem Metallgehalt von 65 Gew.% werden mit 1,5 g eines üblichen Antigasungsadditivs auf Phosphatesterbasis, 7,5 g Butylglykol und 81 g der unter a) hergestellten Bindemittelzubereitung homogen vermischt.

### Vergleichs beispiel 1 (Aufschluß von Aluminiumbronze):

a) Herstellung einer Bindemittelzubereitung:
   4 g deionisiertes Wasser, 32,5 g der Bindemitteldispersion aus Referenz Beispiel 1, 53 g einer durch Kettenverlängerung eines carboxylfunktionellen. Isocyanatgruppen enthaltenden Polyurethan-Prepolymeren mit Wasser hergestellten Polyurethandispersion gemäß EP-A-0 581 211, Herstellungsbeispiel 1 (Festkörpergehalt 30 Gew.-%). 4 g Butylglykol und 6,5 g Polyacrylsäureverdicker (mit Dimethylethanolamin auf pH 7,5 eingestellt, Festkörpergehalt 8 Gew.-%) werden miteinander homogen vermischt.
b) Aluminiumaufschluß
   10 g einer handelsüblichen Aluminiumpaste mit einem Metallgehalt von 65 Gew.% werden mit 1,5 eines üblichen Antigasungsadditivs auf Phosphatesterbasis, 7,5 g Butylglykol und 81 g der unter a) hergestellten Bindemittelzubereitung homogen vermischt.

### Beispiel 2 (Herstellung einer Zweischichtmetalliclackierung, erfindungsgemäß) :

Durch homogenes Vermischen nachstehender Bestandteile wird ein wäßriger Metallicbasislack hergestellt:
50 g des Aluminiumbronzeaufschlußes aus Beispiel 1,
4 methylverethertes Melaminharz (50 gew.-%ig in Butylglykol)
12 Teile deionisiertes Wasser,
6 g Polyacrylsäureverdicker (mit Dimethylethanolamin auf pH 7,5 eingestellt, Festkörpergehalt 8 Gew.-%),
0,5 g einer grünen Pigmentanreibung gemäß EP-B-0 581 211, Herstellungsbeispiel 10 (Pigmentgehalt 20 Gew.-% eines chlorierten Phthalocyanainpigments).
1,5 g Butylglykol,
1 g N-Methylpyrrolidon,
3 g Propanol,
2 g n-Butanol
1 g eines handelsüblichen Entschäumers auf Acetylendiol-Basis,
19 g deionisiertes Wasser.

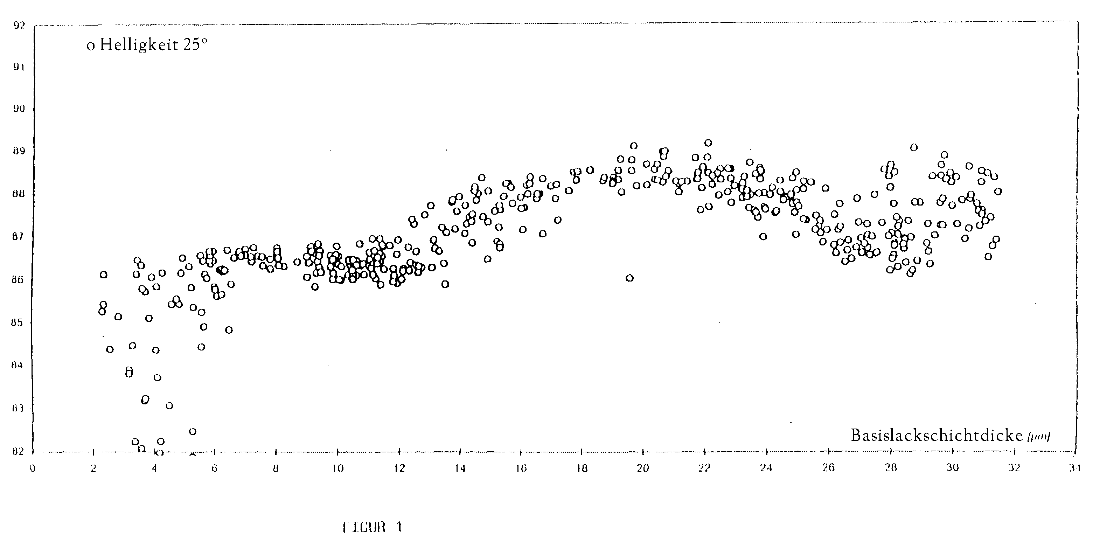

Mit handelsüblicher Kataphoresegrundierung und handelsüblichem Füller vorbeschichtete Karosseriebleche werden hängend mit dem wäßrigen Metallicbasislack im Keil durch elektrostatisches Spritzen lackiert. Nach 5 min. Ablüften bei 80°C wird mit einem handelsüblichen Zweikomponenten-PU-Klarlack durch Druckluftspritzen in einer Trockenschichtdicke von 40 µm überlackiert und 20 min. bei 140°C (Objekttemperatur) eingebrannt. Gemäß der Verfahrensweise der DE-C-196 05 520 wurde an der so erhaltenen Zweischichtmetalliclackierung unter Verwendung des von der Firma BYK-Gardner vertriebenen Meßgeräts Micrometallic^{R} das in Figur 1 dargestellte Korrelationsdiagramm erzeugt. Das Korrelationsdiagramm zeigt die Meßwerte für die Helligkeit (Ordinate: brightness L*25°. Helligkeit im L*,a*,b*-Farbraum, gemessen unter einem Winkel von 25 Grad zum Glanz) als Funktion der Basislackschichtdicke (Abszisse: basecoat filmthickness in µm).

### Vergleichs beispiel 2 (Herstellung einer Zweischichtmetalliclackierung) :

Beispiel 2 wird wiederholt mit dem Unterschied, daß anstelle des Aluminiumaufschlußes aus Beispiel 1 der Aluminiumaufschluß aus Vergleich Beispiel 1 verwendet wird.

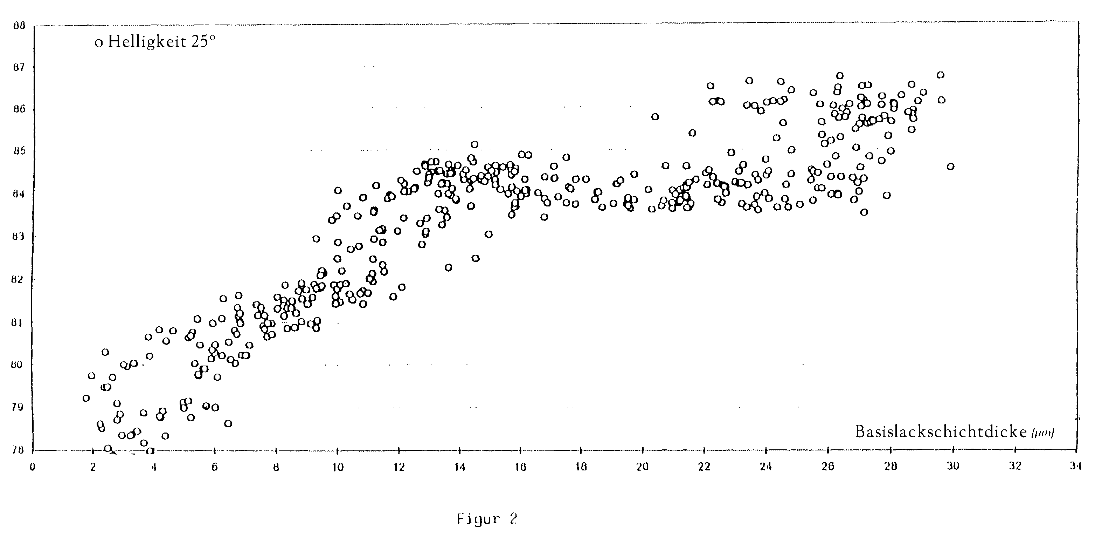

Figur 2 zeigt das hier erhaltene Korrelationsdiagramm.

Beim Vergleich der in Figur 1 und Figur dargestellten Korrelationsdiagramme offenbart sich die Überlegenheit des wäßrigen Metallicbasislacks aus Beispiel 2:
a) Das Helligkeitsniveau des wäßrigen Metallicbasislacks des erfindungsgemäßen Beispiels 2 liegt höher (L*25° beträgt ca. 86) als das des wäßrigen Metallicbasislacks aus Vergleichsbeispiel 2 (L*25° beträgt ca. 84).
b) Das Helligkeitsniveau des wäßrigen Metallicbasislacks des erfindungsgemäßen Beispiels 2 wird bei ca. 7 µm Basislackschichtdicke erreicht, während dies beim wäßrigen Metallicbasislack aus Vergleichsbeispiel 2 erst bei ca. 13 µm Basislackschichtdicke der Fall ist.
c) Der wäßrige Metallicbasislack des erfindungsgemäßen Beispiels 2 weist eine größere Prozeßsicherheit bei der Applikation auf als der wäßrige Metallicbasislack aus Vergleichsbeispiel 2. Dies ergibt sich aus den Mustern der Korrelationsdiagramme. Das Muster des in Figur 1 dargestellten Korrelationsdiagramms zeigt eine geringere Streuung und besitzt insgesamt einen über den gesamten Schichtdickenbereich hinweg ruhigeren und zur Abszisse paralleleren Verlauf als das Muster des in Figur 2 dargestellten Korrelationsdiagramms.

## Patentansprüche

1. Wäßrige Überzugsmittel auf der Basis von einem oder mehreren Bindemitteln, einem oder mehreren Metalleffektpigmenten sowie gegebenenfalls Vernetzern, weiteren Pigmenten und/oder Füllstoffen, lacktechnischen Additiven und/oder Lösemitteln, **dadurch gekennzeichnet, daß** sie als Bindemittel eine wäßrige Dispersion enthalten, von
A) 50 bis 90 Gew.-% eines Reaktionsproduktes aus a) 5 bis 95 Gew.-% eines carboxyfunktionellen Polykondensats, das zusätzlich Epoxidgruppen enthalten kann, und b) 95 bis 5 Gew.-% mindestens eines radikalisch polymerisierbaren olefinisch ungesättigten Monomeren, wobei sich die Mengenangaben der Bestandteile a) und b) auf den Festkörper beziehen und ihre Summe stets 100 Gew.-% beträgt,
B) 50 bis 10 Gew.-% eines Hybridpolymeren, hergestellt durch radikalische Polymerisation von olefinisch ungesättigten Monomeren in Gegenwart von wäßrig dispergierten Siloxanbrücken und/oder Silanolgruppen sowie gegebenenfalls olefinisch ungesättigte Doppelbindungen enthaltenden Polyurethanharzen, wobei die Summe der Gew.-% von A) und B) 100 Gew.-% ergibt und
C) 0 bis 50 Gew.-%, bezogen auf die Summe aus A) und B), eines oder mehrerer weiterer Bindemittel,
wobei sich sämtliche Gew.-%-Angaben jeweils auf den Festkörper beziehen.

2. Verfahren zur Herstellung von Mehrschichtüberzügen durch Aufbringen mindestens einer Grundierungsschicht, einer metalliceffekt- und gegebenenfalls farbeffekt- und/oder weitere Effekte gebenden Basislackschicht sowie einer transparenten Decklackschicht auf ein Substrat, **dadurch gekennzeichnet, daß** die Basislackschicht unter Verwendung eines wäßrigen Überzugsmittels gemäß Anspruch 1 aufgetragen wird.

3. Verfahren nach Anspruch 2, **dadurch gekennzeichnet, daß** es zur Lackierung von Kraftfahrzeugen oder deren Teilen durchgeführt wird.

4. Verwendung der wäßrigen Überzugsmittel nach Anspruch 1 zur Herstellung von Mehrschichtlackierungen, insbesondere auf dem Kraftfahrzeugsektor.

## Claims

1. Aqueous coating media based on one or more binder vehicles, one or more metal effect pigments, and optionally on crosslinking agents, other pigments and/or extenders, customary lacquer additives and/or solvents, **characterised in that** they contain, as binder vehicles, an aqueous dispersion of
A) 50 to 90 % by weight of a reaction product formed from a) 5 to 95 % by weight of a carboxy-functional condensation polymer which may contain additional epoxide groups, and b) 95 to 5 % by weight of at least one olefinically unsaturated monomer which can be polymerised by radical initiation, wherein the quantitative data of constituents a) and b) are given with respect to the solids and the sum thereof is always 100 % by weight,
B) 50 to 10 % by weight of a hybrid polymer produced by the radical-initiated polymerisation of olefinically unsaturated monomers in the presence of siloxane bridges and/or silanol groups in aqueous dispersion, and of polyurethane resins which optionally contain olefinically unsaturated double bonds, wherein the sum of the percentages by weight of A) and B) is 100 % by weight, and
C) 0 to 50 % by weight, with respect to the sum of A) and B), of one or more other binder vehicles,
wherein all the percentage by weight data are given with respect to the solids.

2. A method of producing multi-layer coatings by the application of at least one primer coat, a base lacquer coat which imparts a metallic effect and optionally a coloured effect and/or further effects, and of a transparent covering lacquer coat, to a substrate, **characterised in that** the base lacquer coat is applied using an aqueous coating medium according to claim 1.

3. A method according to claim 2, **characterised in that** it is carried out for the lacquer coating of motor vehicles or parts thereof.

4. Use of the aqueous coating media according to claim 1 for the production of multi-layer coatings, particularly in the automobile sector.

## Revendications

1. Compositions aqueuses de revêtement à base d'un ou plusieurs liants, d'un ou plusieurs pigments à effet métallique ainsi qu'éventuellement d'agents de réticulation, d'autres pigments et/ou de charges, d'additifs usuels dans des peintures et/ou de solvants, **caractérisées en ce qu'**elles contiennent en tant que liant une dispersion aqueuse de
A) 50 à 90 % en poids d'un produit de réaction de a) 5 à 95 % en poids d'un produit de polycondensation à fonction carboxy, qui peut contenir en outre des groupes époxy, et b) 95 à 5 % en poids d'au moins un monomère à insaturation oléfinique, susceptible de polymérisation radicalaire, les données quantitatives des composants a) et b) se rapportant à la matière solide et leur somme étant toujours égale à 100 % en poids,
B) 50 à 10 % en poids d'un polymère hybride préparé par polymérisation radicalaire de monomères à insaturation oléfinique en présence de résines polyuréthanne contenant des ponts siloxane et/ou des groupes silanol ainsi qu'éventuellement des doubles liaisons à insaturation oléfinique, en dispersion aqueuse, la somme des pourcentages en poids de A) et B) donnant 100 % en poids et
C) 0 à 50 % en poids, par rapport-à la somme de A) et B), d'un ou plusieurs autres liants,
les pourcentages en poids étant tous par rapport à la matière solide.

2. Procédé pour la production de revêtements multicouches, par application d'au moins une couche primaire, d'une couche de peinture de base à effet métallique et éventuellement effet coloré et/ou donnant d'autres effets, ainsi que d'une couche de vernis transparent de finition sur un subjectile, **caractérisé en ce que** la couche de peinture de base est appliquée à l'aide d'une composition aqueuse de revêtement selon la revendication 1.

3. Procédé selon la revendication 2, **caractérisé en ce qu'**il est effectué pour le peinturage d'automobiles ou de pièces de celles-ci.

4. Utilisation de la composition de revêtement selon la revendication 1, pour la production de revêtements de peinture multicouches, en particulier dans le secteur de l'automobile.
